# FASCICULE DE BREVET EUROPEEN

(11) **EP 1 658 238 B1**
(45) Date de publication et mention de la délivrance du brevet: **15.08.2012**
(21) Numéro de dépôt: 04767927.9
(22) Date de dépôt: 28.07.2004
(51) Int. Cl.: C02F 1/52, C02F 1/62

(54) **PROCEDE DE TRAITEMENT D'UN LIQUIDE AQUEUX ACIDE CONTENANT DES METAUX LOURDS ET DISPOSITIFS POUR REALISER LEDIT PROCEDE**
VERFAHREN ZUR BEHANDLUNG EINER SCHWERMETALLE ENTHALTENDEN WÄSSRIGEN SAUREN FLÜSSIGKEIT UND VORRICHTUNG ZUR DURCHFÜHRUNG DES VERFAHRENS
METHOD FOR TREATING AN AQUEOUS ACIDIC LIQUID CONTAINING HEAVY METALS AND DEVICE FOR CARRYING OUT SAID METHOD

(30) Priorité: 30.07.2003 FR 0350384
(43) Date de publication de la demande: 24.05.2006
(73) Titulaire: Provalva, 13620 Carry le Rouet (FR)
(72) Inventeur: BERGONZO, Maurice, Marius, Pierre, 92400 Courbevoie (FR); KERMAREC, Joel, Marie, Pierre, 92260 Fontenay-aux-Roses (FR); TALIANI, Laurent, Bosco, 93320 Les Pavillons sous Bois (FR)
(74) Mandataire: Michelet, Alain
(86) Numéro de dépôt international: PCT/FR2004/050366
(87) Numéro de publication internationale: WO 2005/012187

(56) Documents cités:
- EP-A- 0 072 885
- US-A- 4 343 706
- US-A- 4 927 543
- US-A1- 2001 037 981
- US-B1- 6 485 696

## Description

La présente invention se rapporte au domaine du traitement de tout fluide polluant contenant des métaux lourds, et en particulier du traitement des divers effluents industriels contenant des métaux lourds toxiques tels que le zinc, le nickel, le fer, l'étain, le cuivre ou encore l'aluminium.

Les milieux liquides contenant des métaux lourds, et en particulier les effluents industriels contenant de tels métaux, constituent des fluides polluants, lesquels, s'ils sont rejetés sans élimination préalable des métaux lourds, présentent un grand danger pour l'environnement du fait de leur toxicité, de leur persistance dans l'environnement où ils ne sont pas dégradés, et de leur caractère dispersible qui entraîne, avec le temps, la pollution de surfaces étendues, par exemple du fait de leur écoulement par infiltration, avec l'eau de pluie.

Parmi les différentes méthodes proposées pour traiter ces liquides acides contenant des métaux lourds, on connaît à ce jour : l'évaporation, la dialyse et l'électrodialyse, l'osmose inverse, l'échange d'ions, la floculation - précipitation (décrite en particulier dans le brevet US 4,343,706) et enfin le procédé de neutralisation - précipitation qui est le plus couramment utilisé. La présente invention se rapporte à cette dernière famille de procédés.

A ce jour, dans le procédé de traitement par neutralisation - précipitation, le réactif basique communément utilisé est le lait de chaux, qui consiste en une suspension d'hydroxyde de calcium dans l'eau.

L'emploi de lait de chaux comme réactif conduit, du fait de la faible solubilité de la chaux, à introduire dans l'enceinte réactionnelle un grand volume de réactif de neutralisation. Les quantités d'eau contenues dans le réactif de neutralisation sont retrouvées en totalité dans l'effluent liquide résiduaire, suivant l'étape de précipitation des métaux lourds et leur filtration. La nécessité de réaliser un traitement final de cette grande quantité d'effluent liquide résiduaire constitue un inconvénient pour le respect de l'environnement et entraîne aussi un coût industriel important.

Il existe un besoin dans l'état de la technique pour des procédés améliorés de traitement de liquides aqueux acide contenant des métaux lourds, qui soient plus économiques et plus respectueux de l'environnement, que les procédés conventionnels connus.

Il a été mis au point selon l'invention un procédé de traitement d'un liquide aqueux acide contenant des métaux lourds, lequel procédé met en oeuvre un réactif de neutralisation et de précipitation solide anhydre contenant au moins 90% de carbonate de calcium.

On a montré selon l'invention que l'utilisation d'un réactif solide anhydre contenant au moins 90% en poids de carbonate de calcium comme réactif permettant à la fois de neutraliser l'acidité du liquide aqueux à traiter et de précipiter les métaux lourds contenus dans ledit liquide aqueux, est à la fois économique et entraîne une pollution réduite de l'environnement.

L'invention a pour objet un procédé de traitement d'un liquide aqueux acide contenant des métaux lourds, ledit procédé comprenant une étape de réalisation d'un mélange réactionnel entre (i) le liquide aqueux acide contenant les métaux lourds et (ii) un réactif, caractérisé en ce que le réactif consiste en un réactif de neutralisation et de précipitation solide anhydre contenant au moins 90% en poids de carbonate de calcium

L'invention a aussi pour objet un procédé de traitement d'un liquide aqueux acide contenant des métaux lourds, comprenant les étapes suivantes :
a) réaliser, dans une enceinte de réaction, un mélange réactionnel comprenant :
   (i) le liquide aqueux acide contenant les métaux lourds ; et
   (ii) un réactif solide anhydre de neutralisation et de précipitation contenant au moins 90 pour cent en poids de carbonate de calcium
b) agiter le mélange réactionnel obtenu à l'étape a) ;
c) ajuster le pH du mélange réactionnel à une valeur de pH au moins égale à la valeur de pH pour laquelle les métaux lourds précipitent sous la forme de carbonates ou d'hydroxydes ;
d) séparer les carbonates ou les hydroxydes de métaux lourds formés à l'étape c) de l'effluent liquide réactionnel résiduel.

Par « métaux lourds », on entend selon l'invention tous les métaux polluants dont on doit éviter la dispersion dans l'environnement, et plus particulièrement les métaux suivants, représentés selon la nomenclature internationale : Cu, Ag, Sr, Zn, Cd, Hg, Al, Ti, Zr, Sn, Pb, V, Ta, As, Bi, Cr, Mo, W, Ta, Mn, Fe, Co et Ni. Les métaux lourds se présentent en général, dans l'effluent liquide acide, sous la forme de sels des acides contenus dans le liquide aqueux acide à traiter.

Par liquide aqueux acide, on entend selon l'invention un liquide aqueux et comprenant au moins un acide minéral choisi parmi les acides suivants : chlorhydrique, nitrique, fluorhydrique, sulfurique, chromique, phosphorique. Le liquide aqueux acide à traiter peut contenir une combinaison des acides minéraux listés ci-dessus.

Le liquide aqueux acide qui est traité par le procédé selon l'invention peut contenir une combinaison de plusieurs des métaux lourds cités précédemment, à savoir une combinaison de 2, 3, 4, 5, 6, 7, 8, 9, 10, 11 ou encore 12 de ces métaux lourds.

Le procédé selon l'invention n'emploie, à l'étape a), aucun autre réactif que le seul réactif solide anhydre de neutralisation et de précipitation contenant au moins 90% en poids de carbonate de calcium

Le procédé tel que défini ci-dessus, du fait qu'il met en oeuvre un réactif de neutralisation et de précipitation solide prêt à l'emploi accessible en grande quantité et à faible coût, constitue un procédé dont la mise en oeuvre est économique. De plus, du fait que le réactif de neutralisation et de précipitation se présente sous une forme solide et anhydre, le procédé ci-dessus permet la production d'un volume d'effluent liquide final réduit, ce qui abaisse encore son coût de mise en oeuvre par rapport aux procédés connus antérieurement, et ce qui accroît encore son intérêt du point de vue du respect de l'environnement. Notamment, le demandeur a montré que le procédé selon l'invention permettait, selon le degré d'acidité du liquide aqueux contenant des métaux lourds à traiter, une économie significative du coût unitaire des matières premières et du coût de traitement des effluents produits par le procédé. En outre, par rapport à un procédé utilisant du lait de chaux, le procédé selon l'invention, qui utilise un réactif solide anhydre de neutralisation et de précipitation contenant au moins 90% en poids de carbonate de calcium entraîne également une économie d'énergie fossile et une diminution des rejets de dioxyde de carbone à l'atmosphère par suppression de l'émission de dioxyde de carbone nécessitée par la production préalable d'oxyde de calcium à partir du calcaire .par calcination à haute température.

Par ailleurs, l'emploi de lait de chaux comme réactif de neutralisation, dans les procédés connus, conduit, la teneur maximale d'un lait de chaux étant de 250 g/l de chaux à traiter, à introduire dans le procédé de grands volumes d'eau auxquels il faut ajouter l'eau de constitution de l'hydroxyde de calcium. Ces grands volumes d'eau sont inutiles car ils n'influent pas sur la vitesse ou le rendement de la réaction de précipitation des métaux lourds. Surtout, ces grands volumes d'eau se retrouvent en totalité à la fin du procédé, lors de la filtration des « gâteaux » de métaux lourds précipités. Ils ont notamment pour conséquence d'augmenter d'autant le coût du traitement final des effluents résiduaires qui sont rejetés à la fin du procédé, et donc le coût global du procédé.

Un autre avantage du procédé ci-dessus est qu'il peut être réalisé en continu.

De préférence, le réactif solide anhydre de neutralisation et de précipitation utilisé à l'étape a) contient, en poids, au moins 95% et de préférence au moins 98% de carbonate de calcium. Le réactif solide de neutralisation et de précipitation, carbonate de calcium, appartient à la famille des produits minéraux naturels connus : aragonite et calcite (famille la plus répandue).

Par réactif « anhydre » selon l'invention, on entend un réactif qui comprend un pourcentage en poids d'eau inférieur à 3% du produit total dudit réactif, et de préférence inférieur à 1 % du poids total dudit réactif.

Comme cela a déjà été mentionné ci-dessus, le réactif solide anhydre de neutralisation et de précipitation à base de carbonate de calcium a pour fonction à la fois (i) de réactif de neutralisation de l'acide contenu dans le liquide aqueux contenant les métaux lourds à traiter et (ii) de réactif de précipitation desdits métaux lourds.

Le précipité de métaux lourds obtenus à la fin du procédé selon l'invention est principalement constitué de métaux lourds sous leur forme insoluble de carbonates neutres ou basiques, et aussi d'hydroxydes

Avantageusement, on utilisera comme source de calcite la « calcite filler » qui consiste en du calcaire de faible granulométrie. Ces fines sont systématiquement éliminées en début de procédé de fabrication de l'oxyde de calcium, encore appelé chaux vive, du fait que leur faible granulométrie provoque une obstruction des fours utilisés pour la fabrication de l'oxyde de calcium. Il s'agit donc d'une matière première bon marché.

De préférence, le réactif solide anhydre de neutralisation et de précipitation utilisé à l'étape a) du procédé se présente sous la forme d'une poudre ayant une granulométrie inférieure à 500 µm.

Avantageusement, le réactif solide anhydre de neutralisation et de précipitation possède une granulométrie inférieure à 300 µm, préférentiellement inférieure à 200 µm, et de manière tout à fait préférée inférieure à 100 µm.

La faible granulométrie du réactif de neutralisation et de précipitation permet que ce réactif se disperse complètement et très rapidement lors de la réalisation du milieu réactionnel, à l'étape a) du procédé, puis lors de l'étape b) du procédé.

Le réactif solide anhydre de neutralisation et de précipitation utilisé selon l'invention est insoluble dans une solution aqueuse. A la fin de l'étape a), on obtient un milieu constitué d'un mélange aqueux hétérogène liquide/solide, dans le volume duquel les particules de réactif solide anhydre de neutralisation et de précipitation sont réparties de manière homogène.

Selon un mode préférentiel de réalisation de l'étape a), on réalise en continu le mélange réactionnel initial, en introduisant en continu dans l'enceinte de réaction respectivement (i) le liquide aqueux acide et (ii) le réactif solide anhydre de neutralisation et de précipitation, afin de permettre la réalisation en continu de l'ensemble des étapes du procédé. L'objectif est donc de réaliser en continu un mélange le plus homogène possible entre les réactifs (i) et (ii).

Selon ce mode de réalisation préférentiel, l'enceinte de réaction utilisée à l'étape a) du procédé consiste en un réacteur hydrocyclone.

Les hydrocyclones sont bien connus dans l'état de la technique. Ils sont couramment utilisés dans des étapes de séparation entre des gaz et des solides, ou encore pour le lavage des fumées.

Selon l'invention, on a montré qu'un réacteur hydrocyclone peut être adapté pour réaliser le mélange réactionnel initial solide/liquide, à l'étape a) du procédé. Selon l'invention, on tire parti de la géométrie spécifique d'un réacteur hydrocyclone en créant un vortex par l'introduction tangentielle du liquide aqueux acide à grande vitesse, ledit liquide aqueux acide entraînant alors en continu les particules du réactif solide anhydre de neutralisation et de précipitation afin de former le mélange réactionnel initial.

L'hydrocyclone permet par conséquent d'exploiter facilement en régime continu un procédé utilisant comme matières premières deux phases hétérogènes : liquide et solide.
Il est important de signaler également qu'un appareil de type hydrocyclone crée le long de ses parois internes un film mince de mélange réactionnel, lequel offre par conséquent une grande surface d'évaporation. Cette géométrie trouve toute son utilité en cas d'emploi de carbonate de calcium, lequel emploi constitue une caractéristique majeure de la présente invention. En effet, il est connu qu'une attaque acide de carbonate de calcium conduit à un dégagement rapide de gaz carbonique entraînant inévitablement la formation de mousses toujours gênantes. Or, grâce à un dimensionnement correct d'un appareil de type hydrocyclone on peut faire face à cet inconvénient en plaçant l'appareil sous légère dépression, la minceur du film réactionnel et sa grande surface d'évaporation conduisant à une destruction convenable des mousses au fur et à mesure de leur formation.

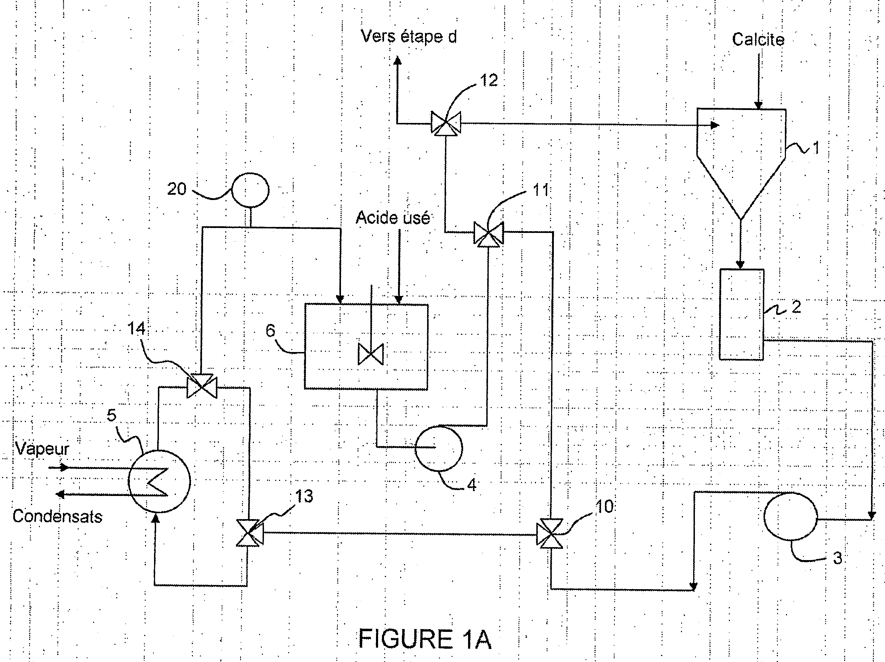

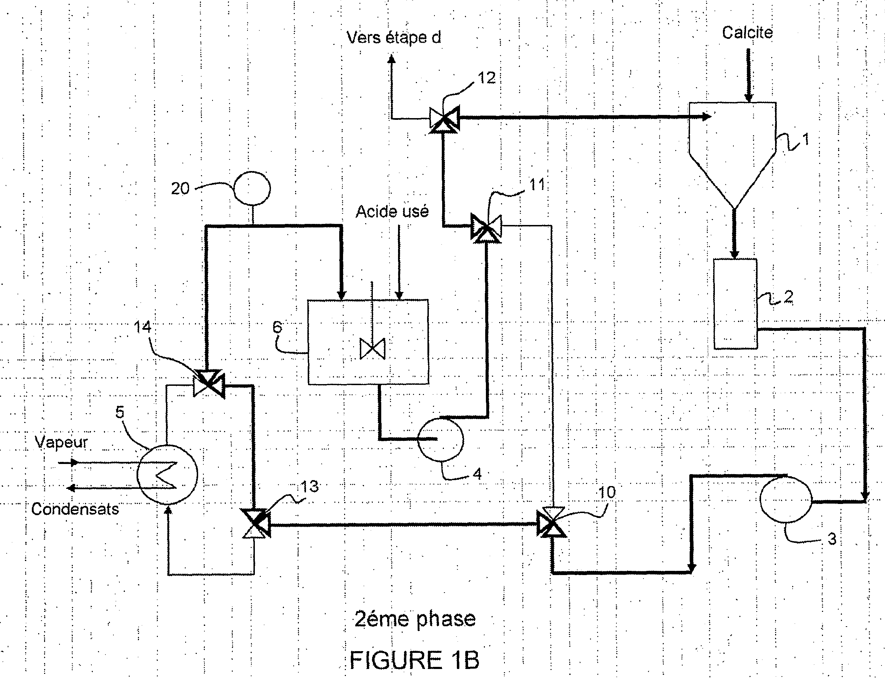

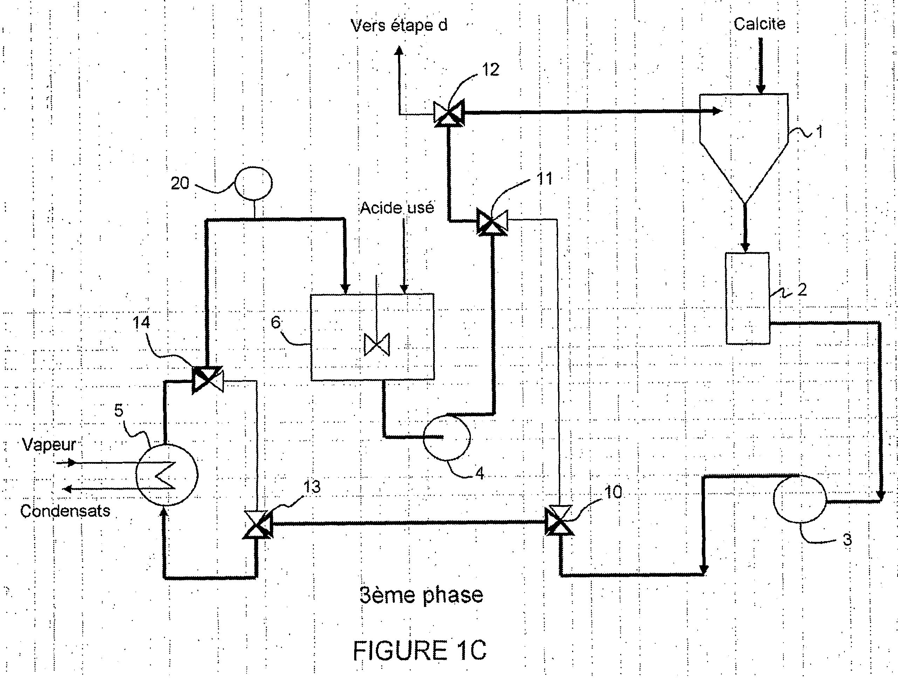

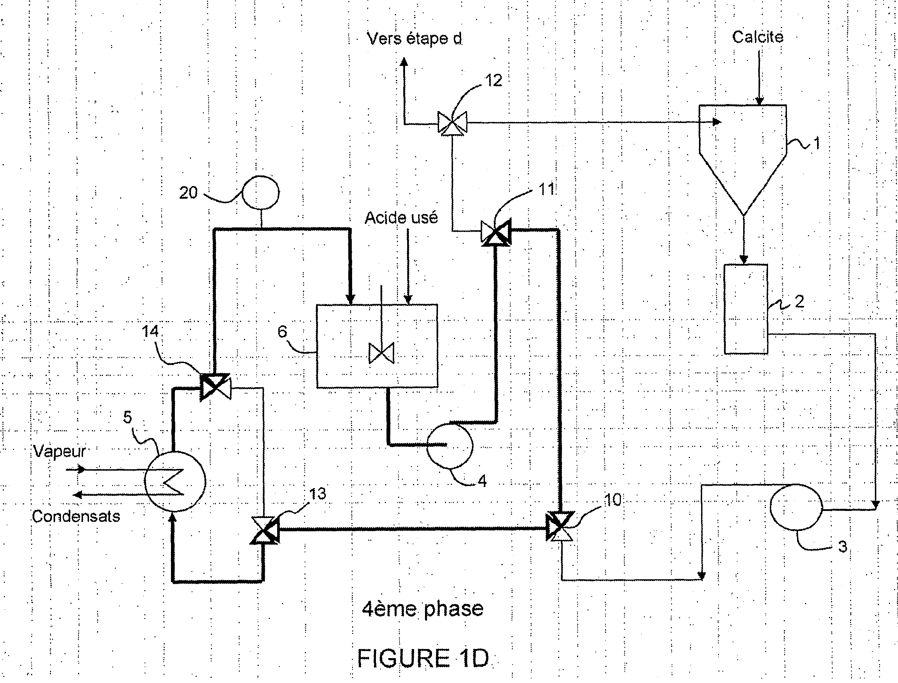

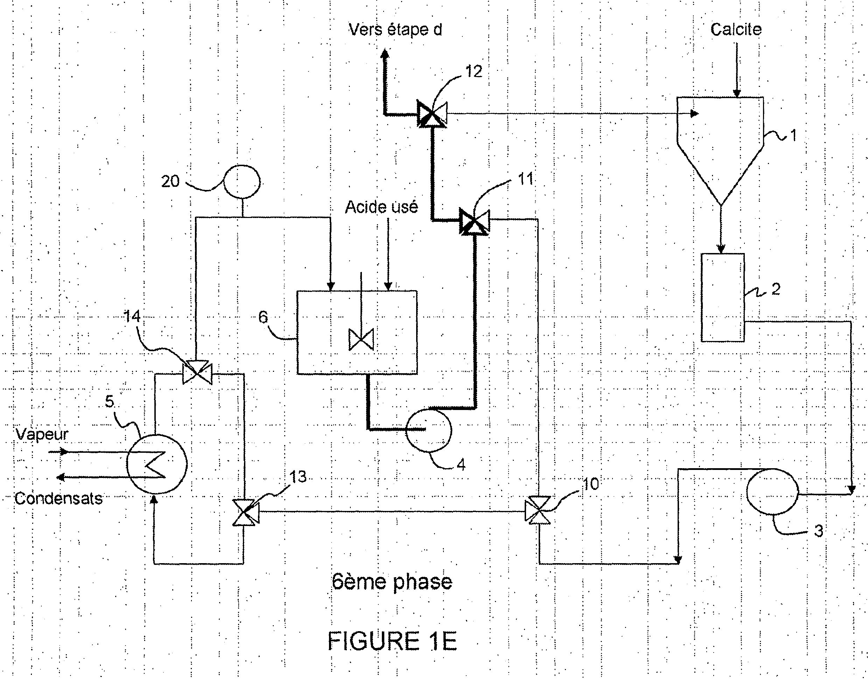

Les figures 1 (A-6), 2 (A-F) et 3 représentent chacune un schéma illustratif d'un dispositif spécifiquement adapté à la mise en oeuvre du procédé de traitement selon l'invention.

A la fin de l'étape a), du procédé, le mélange réactionnel obtenu est un milieu hétérogène solide/liquide constitué de particules de réactif de neutralisation et de précipitation solide en suspension dans le liquide aqueux acide contenant des métaux lourds.

A l'étape b) du procédé on procède à une agitation du mélange réactionnel réalisé à l'étape a), afin de permettre le meilleur contact possible entre le réactif de neutralisation et de précipitation et le liquide aqueux acide. A l'étape b) on crée ainsi les conditions optimales de contact entre le réactif de neutralisation et de précipitation solide et le liquide aqueux à traiter, qui permettent au réactif de neutralisation et de précipitation de réagir avec l'acidité libre et les sels de métaux lourds contenus dans celui-ci, pour produire des sels de calcium et une partie des carbonates ou hydroxydes de métaux lourds insolubles qui précipitent.

A l'étape c) du procédé on complète et on termine la formation et la précipitation des métaux lourds sous forme de carbonates ou d'hydroxydes, à la valeur du pH de consigne.

Selon la composition du liquide aqueux acide à traiter, l'analyse titrimètrique permet de déterminer la valeur du p_{H} qui correspond, non seulement à la neutralisation de l'acidité libre, mais encore et surtout à la précipitation complète des métaux lourds sous formes insolubles. Cette même analyse donne la quantité unitaire de principe actif basique à utiliser pour mener le traitement à son terme.

Cette quantité sera modifiée en tenant compte des liquides basiques nécessaires au lavage des fumées et éventuellement à l'ajustage du p_{H} final. Dans tous les cas la quantité de liquide basique ajoutée ne dépassera 5% du principe actif de la quantité du réactif solide anhydre introduite en tête du processus.

La valeur minimale de pH à laquelle, pour un liquide aqueux acide à traiter donné, il y a précipitation des métaux lourds sous la forme de carbonates ou d' hydroxydes est aussi désignée dans la présente description par valeur de pH « de consigne ».

De plus, selon la nature des acides contenus dans le liquide aqueux à traiter, les sels calciques résultant des réactions de neutralisation peuvent être (i) soit fortement solubles, comme c'est le cas du nitrate de calcium, par exemple, (ii) soit fortement insolubles, comme c'est le cas du sulfate de calcium, par exemple. Dans ce dernier cas l'utilisation de turbidimètre, mesurant la teneur en solides du bain réactionnel, permet d'ajuster l'addition d'eau nécessaire pour maintenir la fluidité du bain au plus prés. A l'étape c) du procédé on ajuste la valeur de pH du mélange réactionnel au moins à la valeur de pH de consigne déterminée, pour le liquide aqueux acide en cours de traitement.

A l'étape c) du procédé la valeur de pH du mélange réactionnel est ajustée à la valeur choisie essentiellement, sinon exclusivement, à l'aide du réactif solide anhydre de neutralisation et de précipitation, qui est un réactif basique. Un faible volume d'un liquide basique est introduit, dans le procédé, afin de laver les fumées qui se dégagent lors de la réaction du réactif de neutralisation et de précipitation avec les sels métalliques, volume dont l'homme du métier tient compte pour l'ajustement du pH du mélange réactionnel.

De manière tout à fait préférée, à l'étape c), on chauffe le mélange réactionnel à une température comprise entre 30°C et 80°C, avantageusement entre 40°C et 70°C, préférentiellement entre 50°C et 65°C, et de manière tout à fait préférée à une température de 60°C, afin d'accélérer la vitesse de réaction des sels d'acide métalliques avec ledit réactif de neutralisation et de précipitation.

Selon les différents modes de réalisation possibles du procédé de l'invention, les étapes a) b) et c) sont réalisées dans une seule enceinte de réaction ou au contraire dans des réacteurs distincts.

Ainsi, selon un premier mode de réalisation particulier du procédé, les étapes a), b) et c) sont toutes réalisées dans la même enceinte de réaction.

Ainsi, selon un deuxième mode de réalisation particulier du procédé, l'étape a) est réalisée dans un premier réacteur (dont la fonction essentielle est le mélange des deux réactifs : liquide aqueux acide contenant des métaux lourds d'une part et réactif basique, solide et anhydre d'autre part), les étapes b) et c) sont réalisées dans un second et même réacteur distinct du premier. Selon ce deuxième mode de réalisation l'étape a) a lieu sur un circuit de recyclage du milieu réactionnel autour du deuxième réacteur où s'effectuent les étapes b) et c). Ce second mode de réalisation conduit à un procédé fonctionnant en discontinu, c'est-à-dire par cycles (ou « bâchées »).

Selon un troisième mode de réalisation du procédé l'étape a) est réalisée dans un premier réacteur-mélangeur et les étapes b) et c) sont réalisées dans un même réacteur distinct du premier. Selon ce troisième mode de réalisation l'étape a) est réalisée directement au-dessus du deuxième réacteur. Ce troisième mode de réalisation conduit à un procédé fonctionnant en semi continu.

Selon un quatrième mode de réalisation, particulier du procédé, les étapes a), b) et c) sont chacune réalisées dans un réacteur distinct des réacteurs utilisés pour réaliser chacune des deux autres étapes.

Ce quatrième mode de réalisation du procédé est préféré car il permet de réaliser séparément chacune des étapes a) , b) et c), pour un lot donné de liquide aqueux acide à traiter et également de traiter successivement et en continu plusieurs lots de liquide aqueux acide.

Selon ce quatrième mode de réalisation, le procédé selon l'invention est réalisé en continu, la réalisation successive de chacune des étapes a), b) et c) nécessitant un simple transfert du mélange réactionnel d'un premier réacteur (étape a) vers un second réacteur (étape b), puis du second réacteur vers un troisième réacteur (étape c), avant de procéder à l'étape d) de séparation.

Afin de réduire l'inconvénient technique constitué par la formation de mousses due à l'emploi de carbonate de calcium, au moment de la réalisation du mélange réactionnel, il est prévu, dans un mode de réalisation particulier du procédé, de placer l'atmosphère de l'enceinte de réaction dans laquelle on réalise le mélange réactionnel, et celle de l'enceinte de réaction dans laquelle on agite le mélange réactionnel obtenu à l'étape a), en légère dépression, c'est-à-dire à une pression inférieure à la pression atmosphérique. En général, on applique une légère dépression de l'atmosphère de l'enceinte de réaction avec un ventilateur d'extraction industriel classique, allant de 300 à 500 millimètres de colonne d'eau.

Selon encore un autre aspect, le procédé de traitement selon l'invention est caractérisé en ce qu'à la fin de l'étape c) les carbonates ou les hydroxydes de métaux lourds précipités et l'effluent liquide réactionnel sont évacués ensemble de l'enceinte réactionnelle par des moyens de soutirage, dont l'ouverture et la fermeture sont contrôlées, préalablement à la réalisation de l'étape d) de séparation.

Dans une étape d) ultérieure, on sépare (i) les précipités de métaux lourds formés pendant les étapes a) à c) de (ii) l'effluent liquide réactionnel résiduel, par filtration à l'aide de filtres utilisés conventionnellement pour ce type de séparation solide/liquide, tels que des filtres-presses. On utilise de préférence des filtres rotatifs à tambour sous vide qui peuvent non seulement filtrer, mais qui peuvent aussi laver le gâteau de précipité de métaux lourds obtenu à la fin de l'étape c). L'étape facultative de lavage du gâteau de précipité de métaux lourds a pour objectif d'épuiser le gâteau de ses sels alcalins ou alcalino-terreux solubles, ce qui a pour effet de réduire la solubilité de l'extrait sec obtenu, dans le test de lixiviation que doit subir le gâteau de précipité avant d'être (i) soit stocké directement par enfouissement dans un lieu de décharge approprié (Classe 1), (ii) soit traité par solidification chimique, préalablement à son stockage final. Le traitement du gâteau de précipité par lavage permet d'augmenter la proportion d'effluents solides à la fin du procédé qui peuvent être directement acheminés vers le lieu de stockage final en décharge, sans traitement de solidification préalable, ce qui réduit encore le prix de revient du procédé selon l'invention. De préférence, le gâteau de précipité, une fois lavé, est soumis à une étape de séchage, par exemple par passage du gâteau de précipité lavé dans un couloir séchant, ce qui permet l'élimination d'une partie de l'humidité de celui-ci et réduit d'autant le poids du déchet solide final à enfouir, et en conséquence également le coût de son enfouissement.

Le mode de réalisation préféré de l'étape d) décrit ci-dessus, notamment l'utilisation de filtres rotatifs à tambour, est rendu possible grâce à la possibilité de réaliser le procédé en continu, au contraire d'un procédé réalisé de manière discontinue.

D'autres caractéristiques techniques avantageuses du procédé selon l'invention apparaîtront ci-dessous, en relation avec la description de trois dispositifs de traitement spécifiquement adaptés pour la mise en oeuvre de ce procédé, lesdits dispositifs de traitement constituant un autre objet de la présente invention.

Les dispositifs de traitement selon l'invention sont détaillés ci-dessous en référence aux figures 1 à 3, qui représentent un schéma illustrant trois modes de réalisation dudit dispositif.

Le premier dispositif de traitement selon l'invention est détaillé ci-dessous en référence à la figure 1 (A-E), qui représente un schéma illustrant un mode de réalisation dudit dispositif selon lequel le procédé fonctionne en discontinu.

L'invention a pour objet un dispositif de traitement d'un liquide aqueux acide contenant des métaux lourds, caractérisé en ce qu'il comprend :
- une enceinte de réaction (1) de type hydrocyclone
- un ballon de garde (2)
- une pompe (3)
- une pompe (4)
- un échangeur de chaleur (5)
- un réacteur (6)
Selon ce premier mode d'exploitation, la réalisation du procédé comprend six phases successives :
a) une première phase au cours de laquelle le réacteur (6) est rempli à raison de 95 à 97% du volume de la « bachée » par le liquide aqueux acide à traiter
b) une deuxième phase représentée par la figure 1-B durant laquelle se déroulent l'étape de mise en contact du réactif solide anhydre et du liquide à traiter et, partiellement la neutralisation de l'acidité libre. Durant cette deuxième phase la configuration du procédé est la suivante :
   La pompe (4), pompe de service du réacteur (6) alimente l'hydrocyclone (1) de façon tangentielle ; Le carbonate de calcium est introduit également dans l'hydrocyclone, mais par gravité. Le débit des deux matières premières est réglé proportionnellement en fonction des résultats de l'analyse du liquide à traiter. Mais alors que la calcite est introduite en totalité (100%), le liquide acide à traiter n'est introduit qu'à 95 à 97% de la quantité stoechiométrique. Ce qui revient à travailler en excés de réactif basique.
   Le liquide acide forme un vortex dans l'hydrocyclone et entraîne le réactif pulvérulent (calcite). De cette façon, c'est un mélange intime des deux produits qui alimente le ballon de garde (2), lequel constitue la capacité d'aspiration de la pompe (3). Celle-ci refoule le mélange dans le réacteur agité (6). La pompe de service (4) du réacteur (6) reprend le bain réactionnel et le refoule dans l'hydrocyclone (1).
   On constitue ainsi une boucle de recyclage constituée, dans l'ordre, par le réacteur (6), la pompe (4), l'hydrocyclone (1), le ballon de garde (2) et la pompe (3). Ce circuit est rendu possible grâce à l'orientation des vannes 3 voies 10,13, 14, 11 et 12 dans le sens requis.
   Cette deuxième phase est poursuivie jusqu'à ce que le p_{H}-mètre de contrôle (20) situé en amont du réacteur (6) indique une valeur de 2,5. Compte tenu du débit de la pompe (4), il est possible, suivant la composition du liquide acide à traiter que la proportionnelle alimentation en calcite soit interrompue pendant le déroulement de cette deuxième phase. Mais, dans tous les cas, la boucle de recyclage est maintenue en service jusqu'à ce que la valeur de p_{H} = 2,5 soit atteinte au p_{H}-mètre de contrôle (20)
c) La troisième phase commence alors. Elle est représentée par la figure 1-C.
   Pendant cette phase se déroulent la fin de la neutralisation de l'acidité libre et la précipitation des métaux lourds sous forme insoluble.
   Pour se faire, la configuration de la boucle de recyclage est la même que précédemment, à cette différence importante prés que les vannes 3 voies (13) et (14) sont orientées de façon telle que l'échangeur de chaleur (5) se trouve en service.
   En effet le p_{H} atteint à la fin de la deuxième phase (2,5) permet désormais l'emploi d'alliages métalliques spéciaux tels que l'Uranus B6, l'Hastelloy ou équivalent, lesquels sont conducteurs de chaleur contrairement aux matériaux plastiques dont sont constitués les autres équipements de la boucle de recyclage.
   Dés lors, le réacteur (6) peut fonctionner, à une température optimale, de l'ordre de 60 à 70°C, en ce qui concerne les vitesses de réaction.
   Si la totalité de la calcite nécessaire a été introduite pendant la deuxième phase, ou sinon dés qu'au cours de la troisième phase la quantité totale de calcite a été introduite, on peut passer à la quatrième phase.
d) La quatrième phase représentée par la figure 1-D consiste à placer la boucle de recyclage dans une configuration telle que l'ensemble : hydrocyclone (1), ballon de garde (2), pompe (3) soit « by-passé ». Il suffit pour cela d'orienter les vannes 3 voies (11) et (10) dans le sens voulu.
   Cette quatrième phase est poursuivie jusqu'à ce que le p_{H}-mètre (20) indique un p_{H} supérieur à celui du point de consigne. Ce qui sera inévitablement le cas puisque le réactif basique (calcite) a été introduit en excès par rapport au liquide acide à traiter.
e) On peut passer à la 5^{ème} phase qui ne fait pas l'objet de schéma puisqu'elle consiste simplement à introduire dans le réacteur (6) les 3 à 5% de liquide acide manquant au départ des opérations, la configuration de la boucle de recyclage restant inchangée.
f) Une fois le p_{H} ramené à sa valeur de consigne, il ne reste qu'à vidanger le réacteur (6) grâce à la pompe (4) en orientant les vannes 3 voies (11) et (12) dans le sens voulu comme montré dans la figure1-E.

Le bain réactionnel résultant est envoyé vers l'étape d) de séparation des effluents liquides et solides.

Les circuits d'effluents gazeux issus des enceintes de réaction n'ont pas été décrits, car ils sont identiques pour tous les modes d'exploitation et sont décrits dans le cadre du mode d'exploitation continu.

Selon l'invention, on a mis au point un second dispositif de traitement d'un liquide aqueux acide contenant des métaux lourds, qui est adapté pour la mise en oeuvre du procédé de l'invention, plus particulièrement pour une mise en oeuvre en semi - continu du procédé de traitement de l'invention.

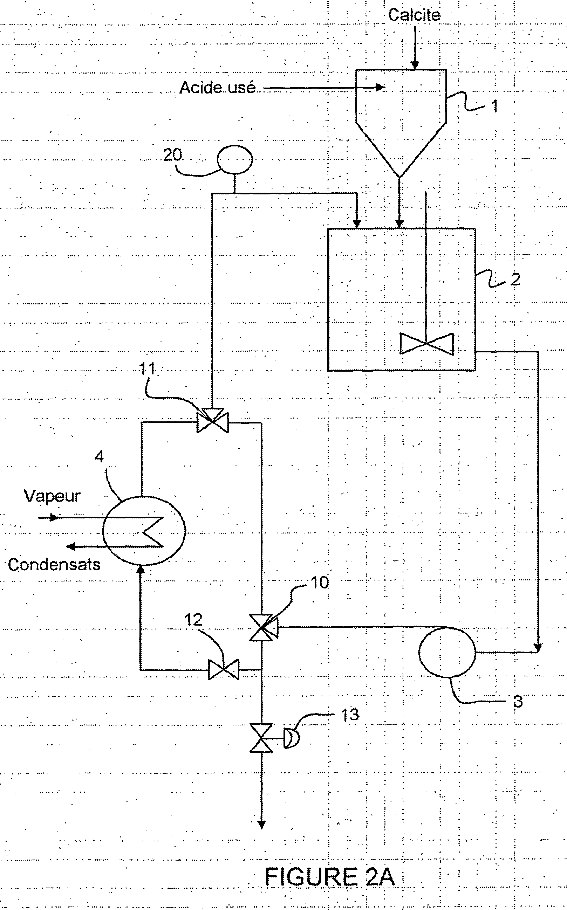

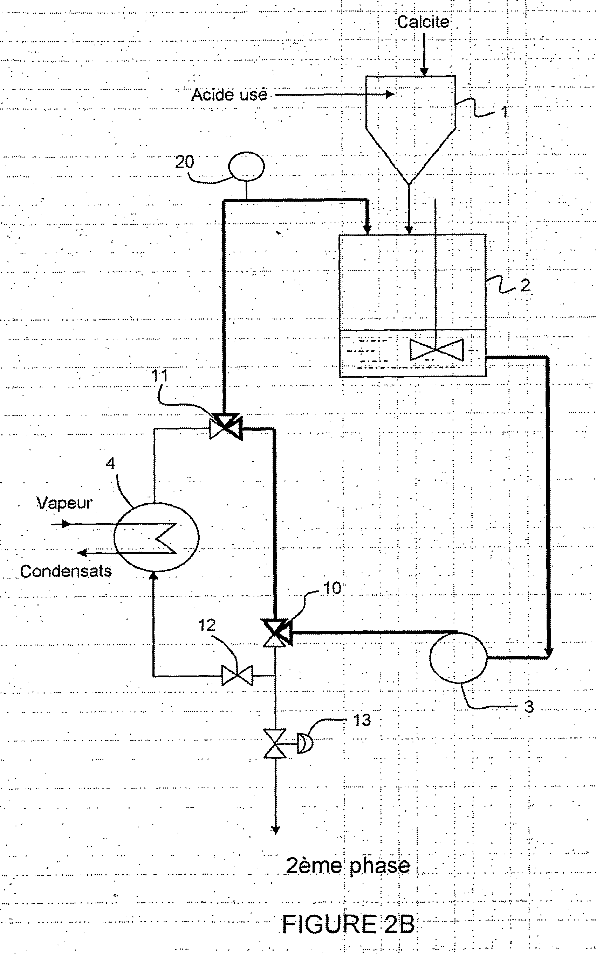

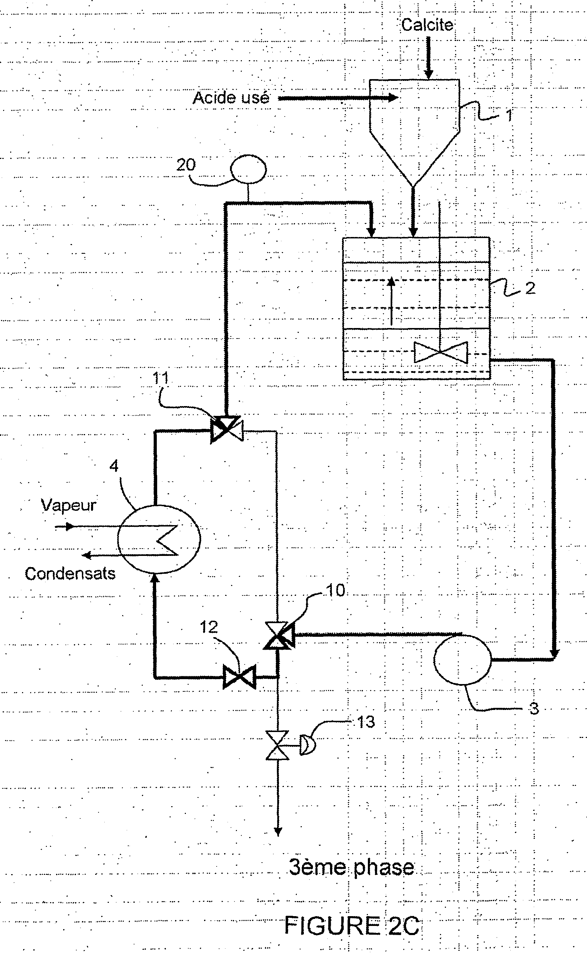

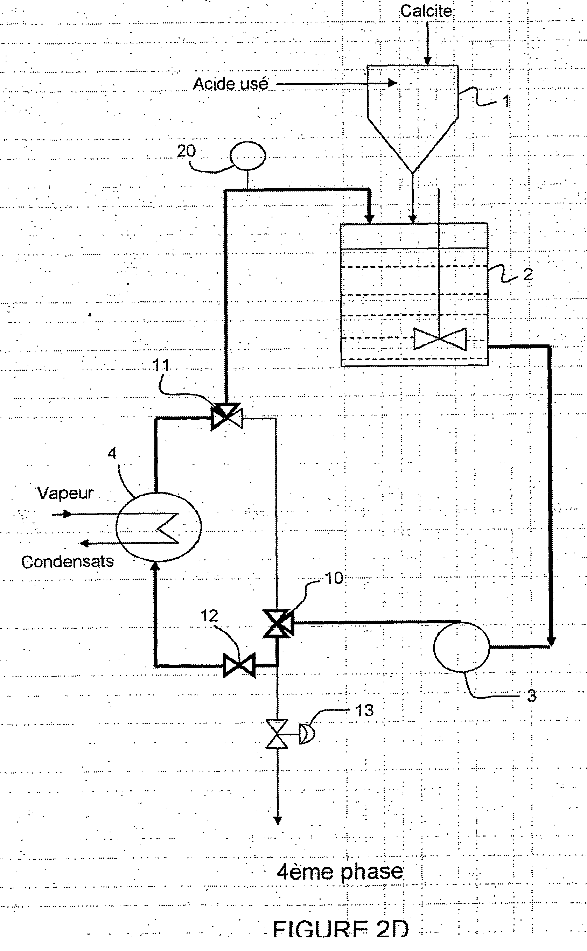

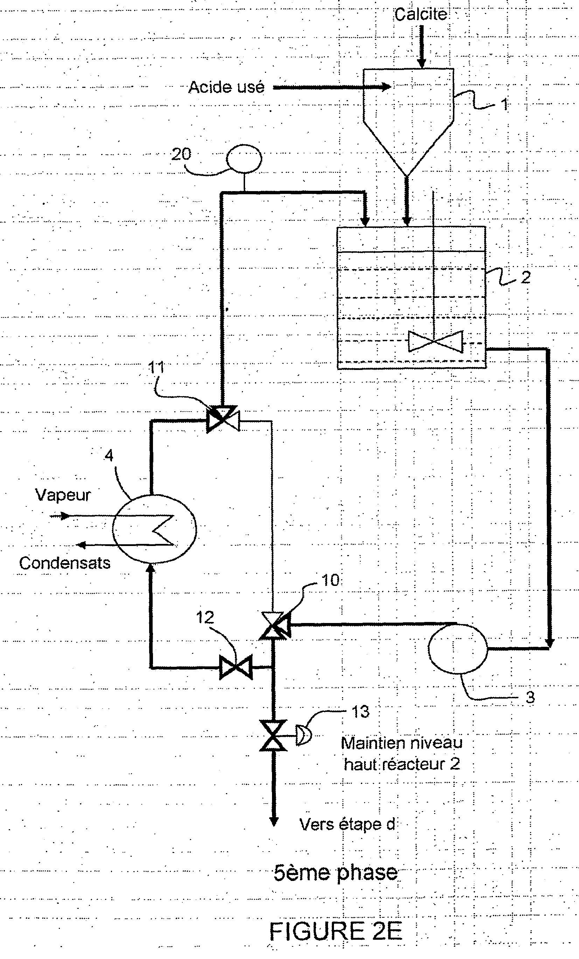

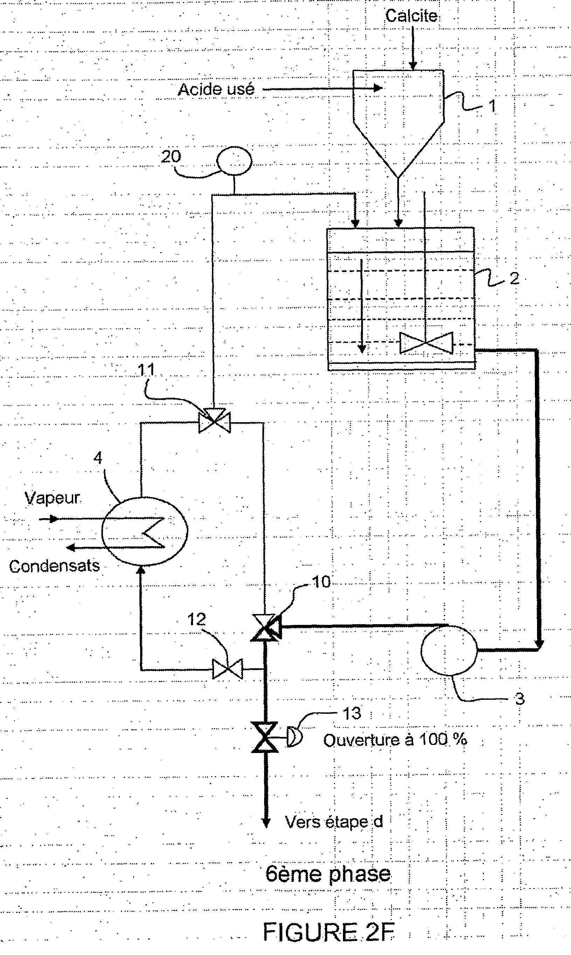

Ce second dispositif est décrit à la figure 2 (A-F).
- une enceinte de réaction (1) de type hydrocyclone
- un réacteur agité (2)
- une pompe (3)
- un échangeur de chaleur (4)

Selon ce deuxième mode d'exploitation, le déroulement du procédé comprend 6 phases distinctes :
a) une première phase au cours de laquelle le réacteur (2) est chargé en matières premières jusqu'à son niveau bas via l'hydrocyclone (1).
   Une fois le niveau bas du réacteur (2) atteint, l'alimentation en matières premières est arrêtée.
   La deuxième phase peut commencer.
b) une deuxième phase représentée par la figure 2-B, au cours de laquelle le bain réactionnel est recyclé autour du réacteur (2) par la pompe (3). Les vannes 3 voies (10) et (12) sont orientées de façon telle que l'échangeur (4) soit « by-passé »
   Pendant cette phase, l'étape de neutralisation de l'acidité libre est amenée à un stade suffisamment avancé pour que la valeur du p_{H} indiqué par le p_{H}-mètre (20) en amont du réacteur (2) atteigne 2,5, valeur à partir de laquelle l'échangeur (4) peut être mis en service.
   La troisième phase peut démarrer.
c) une troisième phase représentée par la figure 2-C au cours de laquelle l'échangeur de chaleur (4) est mis en service sur la boucle de recyclage en orientant les vannes 3 voies (10) et (11) dans le sens voulu. Simultanément l'alimentation du réacteur (2) via l'hydrocyclone (1) est reprise. Cette phase se poursuit jusqu'à ce que le réacteur (2) atteigne son niveau haut.
   Dés lors l'alimentation en matières premières est arrêtée et la quatrième phase peut commencer.
d) une quatrième phase représentée par la figure 2- D qui est, en fait identique à la précédente, à cette différence importante : à savoir que le procédé fonctionne en circuit fermé.
   Cette phase se poursuit jusqu'à ce que la totalité des métaux lourds présents dans le liquide acide ait été précipité. Cet état de fin de réactions est connu par la valeur du p_{H} indiqué par le p_{H}-mètre (20) qui se trouve à sa valeur de consigne.
   Dés lors le système étant au p_{H} voulu et grâce à un dimensionnement des équipements tel que le temps de séjour du bain réactionnel dans la boucle de recyclage est égal ou supérieur au temps de réaction, le procédé peut fonctionner en continu.
   La cinquième phase peut démarrer.
e) Une cinquième phase représentée par la figure 2-E, au cours de laquelle l'alimentation en matières premières est reprise et simultanément la vanne (13) de maintien du niveau haut du réacteur (2) activée. Le débit en aval de la vanne (13) est envoyé vers l'étape de séparation des effluents liquides et solides par filtration.
   Cette phase se poursuit jusqu'à ce que la totalité du lot de liquide acide concerné soit traitée.
   La sixième et dernière phase peut démarrer.
f) La sixième phase représentée par la figure 2-F consiste simplement à vider le système de son contenu. Pour se faire, la vanne 2 voies (12) est fermée et la vanne de régulation (13) ouverte à 100%. Cette phase se poursuit jusqu'à la vidange quasi complète du système c'est-à-dire quand le réacteur (2) atteint son niveau très bas. Dés lors la vanne 2 voies (12) est mise en position ouverte et la vanne de régulation (13) est fermée.
   Le système est prêt pour un nouveau lot d'acide.
Les circuits d'effluents gazeux issus des enceintes de réaction n'ont pas été décrits, car ils sont identiques pour tous les modes de réalisation et sont décrits dans le cadre du mode d'exploitation en continu.

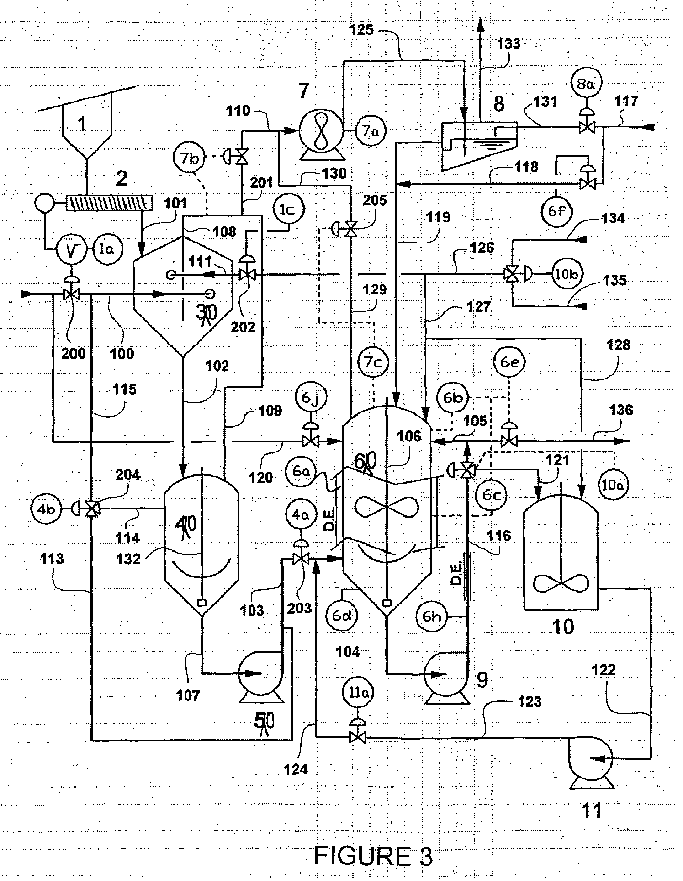

Selon l'invention, on a mis au point un troisième dispositif de traitement d'un liquide aqueux acide contenant des métaux lourds, qui est adapté à la mise en oeuvre en continu du procédé de l'invention.
Ce troisième dispositif est décrit à la figure 3.
L'invention a également pour objet un dispositif de traitement d'un liquide aqueux acide contenant des métaux lourds, caractérisé en ce qu'il comprend :
a) une enceinte de réaction (30) de type hydrocyclone comprenant des moyens d'alimentation (100) de la dite enceinte en liquide aqueux acide contenant des métaux lourds, des moyens d'alimentation(101) de la dite enceinte avec un réactif solide anhydre de neutralisation et de précipitation et des moyens de soutirage (102) d'un mélange réactionnel hétérogène liquide/solide vers un réacteur (40) comprenant des moyens d'alimentation (102) en mélange réactionnel, des moyens d'évacuation (107) du mélange réactionnel et des moyens d'agitation (132).
b) Un réacteur (40) disposé en aval du réacteur (30) et en amont du réacteur (60) et en communication fluidique avec ceux-ci, ledit réacteur (40) comprenant des moyens d'agitation du mélange réactionnel,
c) Le réacteur (60) comprenant des moyens d'évacuation (104) d'un effluent liquide contenant un précipité solide d'hydroxydes ou de carbonates de métaux lourds et de l'effluent liquide réactionnel résiduel, et des moyens d'agitation (106) du mélange réactionnel et des moyens d'évacuation des effluents gazeux (129) ; et
d) En aval du réacteur (60) un moyen pour séparer (i) le précipité d'hydroxydes ou de carbonates de métaux lourds (ii) de l'effluent liquide résiduaire.

Dans un mode de réalisation particulier, le dispositif comprend en aval du réacteur (30) deux réacteurs en série (40) et (60) en communication fluidique entre eux et comprenant chacun des moyens d'agitation du mélange réactionnel.

Selon une caractéristique technique avantageuse, le réactif solide anhydre de neutralisation et de précipitation est introduit dans le réacteur (30) par la tubulure (101), laquelle est reliée à une trémie de stockage de réactif (1) par un dispositif (2) de dosage du réactif solide. Le dispositif de dosage (2) comprend avantageusement un moyen permettant de régler le débit de réactif de neutralisation et de précipitation introduit dans le réacteur (30), vis doseuse par exemple.

Simultanément, l'introduction du liquide aqueux acide contenant les métaux lourds dans le réacteur (30) est réalisée par la tubulure (100) qui débouche au niveau de la section cylindrique (ii) du réacteur (30), le contrôle du débit du liquide à traiter étant réalisé par une vanne (200).

Selon une caractéristique technique avantageuse du dispositif de traitement, un proportionomètre (1a) permet de réguler, à chaque instant, la proportion de liquide aqueux acide à traiter et de réactif de neutralisation et de précipitation solide à introduire dans le réacteur (30).

Dans un mode de réalisation préféré, le réacteur (60) comprend un moyen de mesure du pH (6h) du mélange réactionnel et des moyens de réglage de la valeur du pH dudit mélange réactionnel.

Préférentiellement, on fixe les quantités de réactif solide et anhydre de neutralisation et de précipitation et de liquide aqueux acide à traiter en fonction de la composition dudit liquide au proportionomètre (1a), on fixe également la valeur de consigne du pH mètre de contrôle final (6h). Puis, quand le procédé est en cours de fonctionnement, le pH mètre final (6h), qui mesure le pH du bain réactionnel du réacteur (60), agit en cascade sur le proportionomètre (1a).

Par exemple, si la valeur de pH à la sortie du réacteur (60) est inférieure à la valeur de pH de consigne prédéterminée, le dispositif de régulation du débit (1a) commande un accroissement du débit de distribution du réactif de neutralisation et de précipitation solide anhydre, qui est basique, vers le réacteur (30) ou, alternativement, le dispositif de régulation du débit (1a) commande une réduction du débit de distribution du liquide aqueux acide à traiter vers le réacteur (30).

A l'inverse, si la valeur de pH à la partie du réacteur (60) est supérieure à la valeur de pH de consigne prédéterminée, le dispositif de régulation du débit (1a) commande une diminution du débit du réactif de neutralisation et de précipitation solide anhydre vers le réacteur (30) ou, alternativement, le dispositif de régulation du débit (1a) commande un accroissement du débit de distribution du liquide aqueux acide à traiter vers le réacteur (30).

Dans un mode de réalisation préféré, le dispositif ci-dessus est caractérisé en ce que les moyens de réglage du pH comprennent :
- un premier moyen (1a) de contrôle de la proportion Volume de liquide aqueux acide / poids de réactif de précipitation et de neutralisation solide anhydre dans l'enceinte de réaction (30);
- un second moyen (6j) d'alimentation du réacteur (60) en liquide aqueux acide contenant des métaux lourds.

Dans un autre mode de réalisation particulier, le dispositif ci-dessus est caractérisé en ce que les moyens de réglage du pH comprennent en outre un troisième moyen (119) d'alimentation du réacteur (60) avec un liquide basique.

Dans encore un autre mode de réalisation particulier, le dispositif ci-dessus est caractérisé en ce que le réacteur (30) ou le réacteur (40) lorsqu'il est présent, ou les deux réacteurs (30) et (40), comprennent un moyen (108, 109) de mise en dépression de l'atmosphère interne des réacteurs.

Après sa réalisation dans le réacteur (30), le mélange réactionnel formé est introduit dans le réacteur (40) par la tubulure (102). Le réacteur (40) est équipé des moyens d'agitation adaptés.

Comme cela a déjà été décrit précédemment, le réacteur (30) reçoit d'une part (i) le liquide aqueux acide de façon perpendiculaire à l'axe vertical dudit réacteur (30) et de façon tangentielle à la paroi de la section cylindrique dudit réacteur (30) et, d'autre part, (ii) le réactif de neutralisation et de précipitation solide anhydre de façon gravitaire. Les différentes caractéristiques techniques du réacteur (30), en particulier sa géométrie, ont été spécialement adaptées, aussi bien en ce qui concerne :
- les niveaux des points d'introduction des réactifs, que
- les angles d'écoulement du milieu réactionnel hétérogène solide/liquide en situation de vortex, que
- les prises d'aspiration des évents gazeux.

Comme cela a déjà été précisé précédemment dans la description de l'invention, l'atmosphère interne du réacteur (30), et également l'atmosphère interne du réacteur (40) peuvent être placées en légère dépression.

Pour le réacteur (30), la dépression est réalisée grâce à la tubulure (108), laquelle est reliée au dispositif d'aspiration (7) par l'intermédiaire de la tubulure (110). En aval de la tubulure (108) et en amont de la tubulure (110) la dépression est régulée par la chaîne de contrôle de pression (7b).

La mise en dépression du réacteur (40) est réalisée par la tubulure (109), laquelle est reliée au dispositif d'aspiration (7) par l'intermédiaire de la tubulure (110). Le même dispositif (7b) régule la dépression.

Le dispositif d'aspiration (7) est avantageusement un ventilateur d'extraction industriel classique.

Le dispositif d'aspiration (7) permet également d'éliminer les dégagements de dioxyde de carbone produits au moment de la réalisation du mélange réactionnel, et qui sont en grande partie à l'origine de la formation des mousses à la surface des bains contenus dans le réacteur (30) et également dans le réacteur (40).

Le travail du réacteur (40) dépend à la fois de la nature du ou des acides et de celle des métaux lourds contenus dans le déchet à traiter. Dans tous les cas, le réacteur (40) a pour fonction à la fois de (i) neutraliseur du liquide aqueux acide à traiter et de (ii) réacteur dans lequel s'opère, au moins en partie, la réaction de double décomposition sel métallique/carbonate de calcium, en fonction du liquide aqueux acide en cours de traitement.

Si certains acides donnent naissance à des sels calciques fortement solubles, tel que l'acide nitrique, il en va différemment pour d'autres acides qui donnent naissance à des sels calciques fortement insolubles, comme l'acide sulfurique. Ainsi, il sera dans certains cas nécessaire d'ajouter un volume d'eau supplémentaire dans le réacteur (30) afin de maintenir en suspension les sels calciques fortement insolubles.

C'est la raison pour laquelle, selon une caractéristique technique avantageuse du dispositif, le réacteur (30) comprend une tubulure (111) d'introduction d'eau, dont le débit est commandé par une vanne (202). Le degré d'ouverture et la fermeture de la vanne (202) sont contrôlés par le dispositif de régulation (1c).

Ainsi, un avantage technique supplémentaire du procédé et du dispositif selon l'invention est que la quantité d'eau ajoutée pour la réalisation du mélange réactionnel, à l'étape a) du procédé, consiste en une quantité d'eau exactement suffisante pour assurer la fluidité des milieux réactionnels et la pompabilité des flux en aval, en évitant tout ajout d'eau en excès.

Le système d'agitation (132) du réacteur (40) est du type conventionnel. Il peut consister en un agitateur central pourvu, au niveau du fond du réacteur (40) d'un mobile en forme de croix pour éviter la formation de dépôts solides et, au niveau médian du réacteur (40) d'un mobile à action axiale pour « relever » en continu les solides au sein du bain réactionnel. Le réacteur (60) est relié au réacteur (40) par l'intermédiaire de la tubulure (107), la pompe (5), la tubulure (103) et la vanne (203).

La pompe (50), qui est préférentiellement une pompe du type adapté à faire circuler des liquides réactionnels hétérogènes liquides/solides de type « boues », soutire en continu le mélange réactionnel à partir du réacteur (40).

Le dispositif de régulation (4a) de maintien à niveau constant du réacteur (40) commande la vanne automatique de contrôle du débit du réacteur (40) vers le réacteur (60). Le dispositif de régulation (4a) peut ainsi commander la circulation du mélange réactionnel du réacteur (40) vers le réacteur (60).

Le processeur central commande l'ouverture de la vanne « tout ou rien » à trois voies (204) de la boucle de recyclage autour du réacteur (40) constituée des tubulures (113), (114) et (115) de la manière suivante :
- en cas de production de sels calciques insolubles, par exemple lors d'un traitement d'acide sulfurique ou fluorhydrique, la vanne à trois voies (204) est ouverte dans le sens (113) vers (114) et le débit de recyclage refoulé par la pompe (50) est dirigé vers le réacteur (40) ;
- en cas de production de sels calciques solubles, par exemple lors d'un traitement d'acide nitrique ou chlorhydrique, la vanne à trois voies (204) est ouverte dans le sens (113) vers (115) et la pompe (50) alimente le réacteur (30).

En effet, le bon fonctionnement du réacteur (30) hydrocyclone serait affecté par une arrivée d'une grande quantité d'un liquide « boueux » solide/liquide.

Un recyclage vers le réacteur (30) est opéré dans le cas d'un traitement d'un liquide aqueux acide donnant naissance à des sels solubles. Un recyclage du mélange réactionnel vers le réacteur (40) est opéré en cas de traitement de liquides aqueux acides donnant naissance à des sels calciques insolubles.

Le flux de bain réactionnel provenant du réacteur (40) est refoulé par la pompe (50) et introduit au bas du réacteur (60).

Le réacteur (60) a une fonction de (i) neutraliseur et une fonction de (ii) réacteur de double décomposition sel métallique/carbonate de calcium , en fonction du travail effectué en amont par le réacteur (40) selon la nature du liquide aqueux acide à traiter, comme cela a été précisé précédemment. Dans tous les cas, c'est dans le réacteur (60) que le pH du milieu réactionnel doit être ajusté au moins à la valeur de pH à laquelle il y a formation quantitative d'un précipité des carbonates ou des hydroxydes de métaux lourds, cette valeur de pH étant la valeur supérieure que peut prendre la valeur de pH de consigne.

De manière tout à fait préférée, la valeur du pH de consigne est déterminée automatiquement par un processeur central de traitement, à partir de l'analyse préalable de la composition qualitative et quantitative du liquide aqueux acide à traiter.

Il est important de souligner que, quel que soit le cas de figure, et quel que soit le niveau d'avancement de la réaction de neutralisation qui est atteint à la sortie du réacteur (40), la réaction de neutralisation est désormais suffisamment complète pour permettre d'employer, dans les divers équipements situés en aval du réacteur (40) des matériaux en alliage métallique spéciaux, lesquels sont résistants à la corrosion et sont de bons conducteurs de chaleur. On utilisera de préférence un matériau du type URANUS B 6, Hastelloy ou équivalent.

En conséquence, et de manière préférée, le réacteur (60) et sa boucle de recyclage sont préférentiellement équipés d'une double enveloppe parcourue par de la vapeur basse pression ou de l'eau chaude, de manière à maintenir une température optimale du milieu réactionnel destinée à accélérer la réaction. Cette disposition avantageuse rend possible une capacité maximale du dispositif pour un investissement financier donné, ou encore un investissement financier réduit pour une capacité donnée.

Les moyens d'évacuation (104) du réacteur (60) sont reliés, en aval, à une pompe (9), puis à une tubulure (116).

Selon une disposition avantageuse du dispositif, la tubulure (116) comprend un moyen de mesure (6h) du pH (pH-mètre) du liquide hétérogène solide/liquide en sortie du réacteur (60), dont la fonction est de permettre le contrôle du pH du milieu réactionnel dans le réacteur (60) par la commande en cascade du proportionomètre (1a) réglant les débits relatifs respectivement (i) du liquide aqueux acide et (ii) du réactif solide anhydre de neutralisation et de précipitation, pour maintenir la valeur du pH dans le réacteur (60), à une valeur de pH au moins égale à la valeur du pH de consigne.

Selon une disposition avantageuse, les moyens de réglage ou le maintien du pH comprennent un moyen (1a) de contrôle de la proportion volume de liquide aqueux acide/poids de réactif de neutralisation et de précipitation solide anhydre dans l'enceinte de réaction (30). Le procédé dispose autant que de besoin, dans certains évènements de production, d'un second moyen (6j) de commande d'une vanne d'alimentation de l'enceinte de réaction (60) en liquide aqueux acide contenant des métaux lourds, lequel moyen de contrôle (6j) est monté sur la tubulure (120), et ce en cas de pH final trop élevé, et d'un troisième moyen (6f) de commande d'une vanne d'alimentation de l'enceinte de réaction (60) en liquide basique, lequel moyen de réglage (6f) est monté sur la tubulure (118), et ce en cas de pH final trop bas.

Selon une caractéristique préférée, le réacteur (60) et sa boucle de recyclage comprennent en outre un moyen de chauffage du mélange réactionnel, ledit moyen de chauffage pouvant être de tout type connu utilisé dans l'industrie. Préférentiellement, le réacteur (60) et sa boucle de recyclage sont équipés d'une double enveloppe parcourue par un fluide chauffant afin d'amener le bain réactionnel à la température de réaction optimale.

De manière tout à fait préférée, la surface interne des réacteurs (30) et (40) est réalisée en un matériau résistant à la corrosion par les acides tels que le polypropylène (PPH), ou encore le polytétrafluoroéthylène (PTFE).

La neutralisation de l'acidité libre contenue dans le liquide aqueux acide contenant des métaux lourds est suffisamment avancée après le passage dans les réacteurs (30) et (40) pour que les matériaux au contact du mélange réactionnel dans la suite du dispositif ne requièrent pas le même niveau de résistance à la corrosion acide quelle que soit la nature de l'acidité libre du liquide aqueux acide contenant des métaux lourds en cours de traitement. De manière tout à fait préférée, le réacteur (60) est réalisé dans un matériau métallique bon conducteur de chaleur, afin de réaliser facilement, et sans perte inutile d'énergie, le chauffage du mélange réactionnel, à l'étape c) du procédé. A titre d'exemple, le réacteur (60) est réalisé dans un alliage du type URANUS B 6, Hastelloy ou équivalent.

De plus, dans le mode de réalisation préférentiel dans lequel le procédé selon l'invention est réalisé en continu, on utilise un dimensionnement beaucoup plus faible des équipements par rapport à celui nécessité par un procédé discontinu fonctionnant par cycles.

Préférentiellement, le dispositif de traitement selon l'invention comprend un processeur électronique central qui a pour fonction :
- de fixer au proportionomètre (1a) en tête du procédé les débits relatifs d'acide usagé et de réactif basique, soluble et anhydre en fonction de l'analyse de l'acide à traiter, c'est-à-dire essentiellement la nature et la quantité de l'acide ou des acides et la nature et la quantité du métal ou des métaux lourds contenus dans l'acide à traiter,
- de fixer au pH mètre régulateur (6h) en fin du procédé la valeur du point de consigne à respecter en fonction de l'analyse de l'acide à traiter, c'est-à-dire la nature du métal lourd présent dont la précipitation quantitative du carbonate ou de l'hydroxyde se fait au pH le plus élevé,
- de positionner la vanne (8a) d'admission du liquide basique au scrubber (8),
- de placer la vanne tout ou rien trois voies (204) dans le sens voulu en fonction de la solubilité des sels calciques qui vont se former, solubilité connue à partir de l'analyse de l'acide à traiter, et
- de façon globale de contrôler et de gérer l'ensemble du procédé et en particulier de faire face aux différents évènements de production.

Dans une situation de fonctionnement normal du procédé, le réacteur (60) est rempli du mélange réactionnel jusqu'au niveau moyen (6c).

Comme le réacteur (40), le réacteur (60) est équipé d'une boucle de recyclage comprenant l'enchaînement de la tubulure (104), la pompe (9), la tubulure (116) et la tubulure (105). La pompe (9) est préférentiellement du même type que la pompe (50).

Pour le réacteur (60), le taux de recyclage va préférentiellement de 5 à 10. Le taux de recyclage désigne le rapport entre le débit renvoyé en boucle fermée vers le réacteur et le débit de soutirage du réacteur. Par exemple, pour un taux de recyclage de 10, le dispositif de l'invention à un débit de recyclage dix fois plus grand que le débit de soutirage. Cet aspect de fonctionnement du dispositif de l'invention présente au moins deux avantages :
- il permet d'augmenter le temps de séjour du mélange réactionnel dans le réacteur, sans augmenter le volume dudit mélange réactionnel dans ledit réacteur ; et
- il permet au mélange réactionnel hétérogène solide/liquide d'être brassé par la pompe centrifuge ce qui contribue beaucoup à l'homogénéisation de ce mélange réactionnel.

Des détecteurs de niveau localisés respectivement au niveau supérieur (6b) et moyen (6c) peuvent chacun commander la vanne de régulation (6e) du débit de production s'écoulant par la tubulure (136).

Le pH-mètre (6h), qui est relié au processeur central, et dont le point de consigne est fixé en fonction de l'analyse du liquide aqueux acide en cours de traitement, constitue également l'instrument de contrôle du produit fini.

Pour permettre, quelle que soit la situation, un bon fonctionnement en continu du procédé de traitement selon l'invention, les caractéristiques techniques du dispositif de traitement selon l'invention permettent le déclenchement de plusieurs types de séquences d'étapes de réajustement des conditions de pH du milieu réactionnel contenu dans le réacteur (60), selon la valeur de la déviation du pH du milieu réactionnel par rapport à la valeur de pH de consigne prédéterminée.

La première séquence d'étapes de réajustement du pH est mise en oeuvre dans les situations dans lesquelles, pendant un temps très court, par exemple inférieur à 2 minutes, le pH-mètre (6h) mesure une déviation faible du pH fixé, par exemple une déviation inférieure à 0,5 unité de pH par rapport à la valeur de pH de consigne. Dans ce cas, la régulation en cascade du dispositif de régulation proportionomètre (1a) fait varier la proportion liquide aqueux acide/réactif de neutralisation et de précipitation solide anhydre, à l'entrée du dispositif, afin de rétablir le pH du mélange réactionnel dans le réacteur (60) à au moins la valeur de pH de consigne.

La seconde séquence de réajustement du pH est mise en oeuvre dans les situations dans lesquelles le système ne retrouve pas son équilibre au bout d'une durée acceptable, par exemple dix minutes, ou encore si la déviation de pH constatée par le pH-mètre (6h) est (i) soit très rapide, (ii) soit très importante. Dans ce cas, l'action en cascade sur le proportionomètre de départ (1a) est interrompue, et le pH-mètre (6h) commande, via le processeur central, l'introduction directe de flux liquide aqueux acide ou d'un liquide basique, selon le sens de la déviation de pH constatée, dans le réacteur (60). L'introduction directe de liquide aqueux acide est réalisée par l'intermédiaire de la commande de la vanne (6j). L'introduction d'un liquide basique, par exemple du lait de chaux, est réalisée par l'intermédiaire de la commande de la vanne (6f) qui régule l'admission du liquide basique acheminé par la tubulure (117), vers la tubulure (118), puis la tubulure (119), laquelle tubulure (119) débouche dans le réacteur (60).

Les fluides acide ou basique arrivant directement dans le réacteur (60), le pH du mélange réactionnel contenu dans le réacteur (60) sera amené très rapidement au pH de consigne et le système retrouvera rapidement son équilibre.

Deux autres séquences de réajustement du pH dans le réacteur (60) sont prévues en cas d'échec des deux séquences d'étapes de rétablissement du pH du mélange réactionnel contenu dans le réacteur (60) qui sont décrites ci-dessus.

Tout d'abord, dans le cas, bien que très improbable, d'échec des deux séquences de rétablissement du pH précédentes, ou encore dans le cas de déviation du pH du mélange réactionnel beaucoup plus forte ou beaucoup plus rapide, le pH-mètre (6h) commande le remplissage du réacteur (60) du niveau moyen (6c) jusqu'au niveau supérieur (6b), ce qui entraîne une augmentation du temps de séjour du bain réactionnel dans le réacteur (60), sans interrompre la continuité du fonctionnement du dispositif.

De plus, pendant le temps de remplissage du réacteur (60) avec le mélange réactionnel provenant du réacteur (40), le mélange réactionnel n'est plus évacué du réacteur (60) par la tubulure (136), puisque la vanne de commande reste fermée jusqu'à ce que le niveau (6b) soit atteint. Dans cette situation, le procédé dispose d'une période de temps supplémentaire pour replacer le dispositif dans des conditions normales de fonctionnement,. La durée de cette période de temps supplémentaire dépend du volume de mélange réactionnel contenu entre le niveau moyen (6c) et le niveau supérieur (6b) du réacteur.

En cas d'échec de toutes les séquences de réajustement du pH décrites ci-dessus, une dernière séquence comprend les étapes suivantes, qui peuvent être réalisées via les commandes du processeur central :
- fermeture de la vanne (6e) d'écoulement du débit de production et ouverture de la vanne « tout ou rien » (10a) à trois voies, dans le sens (116) vers (121) pour diriger le débit de la pompe (9) vers le bac intermédiaire (10) ;
- arrêt de l'alimentation du dispositif en matières premières ;
- fermeture de la vanne (4a) ; le réacteur (40) fonctionne alors en circuit fermé ;
Lorsque le niveau de mélange réactionnel, dans le réacteur (60) atteint le niveau bas (6d), c'est à dire lorsque le réacteur (60) est vide, alors la dernière séquence d'étapes se poursuit par les étapes suivantes :
- la vanne (10a) revient en position normale de fonctionnement et permet le circuit d'écoulement (116) vers (105), puis (105) vers (136) ;
- le dispositif est à nouveau alimenté en matières premières, grâce à la commande du proportionnomètre (1 a) ;
- la vanne (4a) est à nouveau ouverte.
Le réacteur (60) fonctionne en circuit fermé jusqu'à ce que le niveau supérieur (6b) soit atteint. Une fois que le niveau (6b) est atteint, le dispositif selon l'invention revient à des conditions normales de fonctionnement et, via le pH-mètre (6h), le processeur replace la commande de la vanne de production (6e) sur le niveau moyen (6c). Le dispositif se retrouve alors en fonctionnement normal.

Pendant le déroulement de cette dernière séquence d'étapes de réajustement du pH, le dispositif se retrouvera, pendant un court moment, à l'arrêt. Toutefois, cette interruption de la continuité du procédé est extrêmement courte car la pompe (9) a une capacité de débit de 5 à 10 fois supérieure au débit de production de l'ensemble du dispositif.

Un avantage technique du procédé et du dispositif selon l'invention est que, pendant le nouveau remplissage du réacteur (60) jusqu'au niveau supérieur (6b), ledit dispositif fonctionne de manière discontinue, comme dans le cas des unités de traitement classique, mais avec un temps de séjour du milieu réactionnel dans le réacteur (60) 1,5 fois plus long pendant son remplissage, avec un fort taux de recyclage et à une température optimale pour la réaction de neutralisation et de précipitation des métaux lourds.

Lors de la remise en route du dispositif de traitement, le pH-mètre (6h) fonctionne et la valeur de pH mesurée est à nouveau comparée à la valeur consigne de pH. Simultanément, le processeur replace la commande de niveau du réacteur (60) sur le niveau moyen (6c) : le système est à nouveau dans des conditions normales de fonctionnement. Des boucles de régulation identiques de mise en oeuvre du procédé de traitement sont utilisées lors d'une opération de changement du type du liquide aqueux acide à traiter, par exemple lorsque la nouvelle matière première à traiter possède une nature ou une quantité d'acide, ou encore une nature et une quantité de métaux lourds distincte de celle de la matière première en fin de traitement. Dans ces conditions :
- si les conditions de traitement de la nouvelle matière première sont voisines de celles de la matière première qui vient d'être traitée, ce qui doit être fréquent s'il existe une bonne gestion des stocks de déchets à traiter, alors le processeur central déclenche une séquence d'étapes de réajustement du pH du milieu réactionnel dans le réacteur (60) qui est identique à la séquence d'étapes décrite précédemment pour les très faibles déviations du pH du mélange réactionnel.

Si les conditions de traitement sont peu éloignées de celles de la matière première qui vient d'être traitée, alors le processeur central déclenche une séquence d'étapes de réajustement du pH du milieu réactionnel dans le réacteur (60) qui est identique à la séquence d'étapes décrite dans des conditions décrites précédemment pour les déviations moyennes de pH.
Si les conditions de traitement sont très éloignées de celles de la matière première traitée précédemment, le processeur central déclenche une séquence d'étapes de réajustement du pH du milieu réactionnel dans le réacteur (60) qui est identique à la séquence d'étapes décrite précédemment pour les déviations fortes de pH ; il s'agit dans ce cas d'une séquence d'arrêt de courte durée, puis de redémarrage automatique du dispositif de traitement selon l'invention.

Les volumes de liquide recueillis, soit pendant les incidents de fonctionnement, soit éventuellement lors du changement du type de liquide aqueux acide à traiter, dans le bac intermédiaire (10), sont renvoyés en très faible quantité par la pompe (11) dans la boucle de recyclage du réacteur (60) qui comprend les tubulures (123) et (124). Le débit est commandé par la vanne de régulation de débit (11 a) via le processeur central.

Le traitement des effluents gazeux provenant des réacteurs (30), (40) et (60) est réalisé dans le « scrubber » (8) alimenté en effluents gazeux par la tubulure (125) qui constitue la tubulure de refoulement du ventilateur (7). L'aspiration de ce ventilateur se fait grâce à la tubulure (110) sur laquelle sont piquées : d'une part la tubulure (130) équipée de la vanne de détente (205), car le réacteur (60) fonctionne à la pression atmosphérique, d'autre part la tubulure (201) équipée de la vanne de régulation de pression (7b) car les réacteurs (30) et (40) fonctionnent en légère dépression.

Dans le « scrubber », les effluents gazeux qui contiennent, entre autres, du dioxyde de carbone de très faibles quantités de poussières entraînées et de vapeurs acides, sont traités par un liquide basique. Le « scrubber » est alimenté en liquide basique par la tubulure (131), qui est reliée à la vanne de régulation de débit (8a), puis à la tubulure (117). Le « scrubber » est relié à l'atmosphère extérieure par la tubulure (133).Les acides sont neutralisés et les poussières sont captées dans le liquide basique. En revanche, le temps de séjour est insuffisant pour permettre une carbonatation quantitative du dioxyde de carbone. Dans ces conditions, le flux s'écoulant du « scrubber » (8) vers le réacteur (60) par l'intermédiaire de la tubulure (119) est essentiellement constitué du liquide basique légèrement carbonaté. Ce très faible apport basique au réacteur (60) est pris en compte par le processeur central qui corrige en conséquence le rapport liquide aqueux acide/réactif de neutralisation et de précipitation solide anhydre, en tête du dispositif, c'est-à-dire à l'étape a) du procédé. Le liquide aqueux basique introduit dans le scrubber, en faible quantité, vise exclusivement à laver et neutraliser les effluents gazeux du procédé.

Le dispositif de traitement selon l'invention comprend également un circuit qui peut être alimenté (i) soit en eau par la tubulure (134), par exemple dans le cas de production de sels calciques insolubles, (ii) soit par des solutions d'acide par la tubulure (135), tels que l'acide nitrique ou l'acide chlorhydrique, grâce à la vanne à trois voies (10b). Les solutions d'eau ou d'acide parviennent dans le réacteur (30) par l'intermédiaire des tubulures (126), puis (111). L'eau ou l'acide parvient jusqu'au réacteur (60) par l'intermédiaire de la tubulure (126), puis de la tubulure (127). L'eau ou l'acide parvient jusque dans le bac intermédiaire (10) par l'intermédiaire des tubulures (126), (127), puis (128).

L'envoi des solutions acides est réalisé lorsque le dispositif de traitement selon l'invention est vidangé et placé à l'arrêt, par exemple pour son entretien. Ainsi, les équipements et accessoires du dispositif se trouvent automatiquement nettoyés des dépôts éventuels. Les effluents de nettoyage sont envoyés dans le bac intermédiaire (10).

A la fin de l'étape c) du procédé, préalablement à l'étape d) de séparation, l'effluent liquide contenant les métaux lourds précipités sous la forme de carbonates ou d'hydroxydes, est évacué par le circuit d'évacuation qui comprend successivement la pompe (9), la tubulure (116), et la vanne (6e), et enfin la tubulure (136).

La tubulure (136) débouche sur un moyen pour séparer (i) le précipité de carbonate ou d'hydroxyde de métaux lourds et (ii) l'effluent liquide résiduaire.

De préférence, ledit moyen de séparation consiste en un filtre de type connu adapté, tel qu'un filtre sous vide à tambour rotatif.

De manière générale, le dispositif de traitement décrit ci-dessus permet d'assurer de façon fiable :
- la continuité de la mise en oeuvre du procédé de l'invention, aussi bien pour un liquide aqueux acide à traiter donné, que pour le passage en continu d'un premier liquide aqueux acide à traiter à un second liquide aqueux acide ;
- il offre la flexibilité désirée pour l'obtention d'un résultat optimal dans le traitement des déchets liquides aqueux acides contenant des métaux lourds, quelle que soit la composition du déchet à traiter ;
- il permet une fixation précise du pH de consigne du milieu réactionnel qui doit être atteint pour l'obtention d'une précipitation complète des métaux lourds, pour un déchet donné, et permet par conséquent une économie dans la consommation du réactif de neutralisation et de précipitation solide anhydre basique, tout en assurant une excellente qualité du traitement.

D'autres avantages techniques du procédé du dispositif selon l'invention sont indiqués ci-dessous :
- il est connu que, pour un métal lourd donné, le carbonate précipite de manière quantitative à un pH plus bas qu'un hydroxyde. Ainsi, l'emploi de carbonate de calcium qui peut conduire à la production de carbonates, est moins exigeant en quantité de matière active (CaO) qu'un procédé employant le lait de chaux ou l'oxyde de calcium comme réactifs, puisque ces réactifs conduisent tous à la formation d'hydroxydes.
- le fonctionnement en continu et la diminution significative de la quantité d'effluents liquides, laquelle est une conséquence directe de l'emploi de réactifs basiques anhydres, conduisent à une diminution importante de la taille des filtres nécessaires à la réalisation de l'étape de séparation des effluents liquides et solides.

Dans ces conditions, pour un investissement financier égal, voire moindre, le procédé continu selon l'invention permet l'utilisation de filtres du type filtre continu à tambour sous vide, qui présentent un avantage essentiel dans le traitement des acides usagés, car ils sont capables à la fois de filtrer et de laver le précipité de métaux lourds obtenu. De plus, pour un investissement financier réduit, il est avantageux de disposer un « couloir séchant » à la sortie du filtre. Ainsi, l'utilisation rendue économiquement possible d'un filtre continu à tambour sous vide, en amont d'un « couloir séchant », grâce au procédé de l'invention, conduit, d'une part, à l'obtention de « gâteaux » de métaux lourds précipités de faible poids, parce qu'ils sont plus secs, cela quelle que soit la destination finale de ce déchet final. Par ailleurs, le lavage dans le filtre en continu aura pour résultat l'épuisement de l'extrait sec du gâteau en sels calciques solubles, ce qui est le cas des nitrates et chlorures, par exemple. De tels gâteaux pourront désormais subir avec succès le test normalisé de lixiviation dont le résultat détermine leur destination finale : enfouissement direct en décharge autorisé de classe I en cas de test positif ou traitement de solidification préalable à leur enfouissement en cas de test négatif. Ainsi, la proportion de gâteaux admis directement en décharge classée de type **I** augmentera de façon significative.

Or, le traitement de solidification est, bien entendu, beaucoup plus coûteux que l'acheminement direct vers une décharge de classe 1.

## Revendications

1. Procédé de traitement d'un liquide aqueux acide contenant des métaux lourds, **caractérisé en ce qu'**il comprend une première étape au cours de laquelle on réalise, dans une enceinte de réaction consistant en un réacteur de type hydrocyclone, un mélange réactionnel comprenant :
(i) le liquide aqueux acide contenant les métaux lourds ; et
(ii) un réactif solide anhydre de précipitation et de neutralisation contenant au moins 90 pour cent en poids de carbonate de calcium.

2. Procédé selon la revendication 1, **caractérisé en ce qu'**il comprend les étapes suivantes :
a) Réaliser, dans une enceinte de réaction consistant en un réacteur de type hydrocyclone, un mélange réactionnel comprenant :
(i) le liquide aqueux acide contenant les métaux lourds ; et
(ii) un réactif solide anhydre de précipitation et de neutralisation contenant au moins 90 pour cent en poids de carbonate de calcium ;
b) Agiter le mélange réactionnel obtenu à l'étape a) ;
c) Ajuster le pH du mélange réactionnel à une valeur de pH au moins égale à la valeur de pH pour laquelle les métaux lourds précipitent sous la forme d'hydroxydes ou de carbonates ; et
d) Séparer les hydroxydes ou les carbonates de métaux lourds formés à l'étape c) de l'effluent liquide réactionnel résiduel.

3. Procédé selon l'une des revendications 1 ou 2, **caractérisé en ce que** le réactif solide anhydre de précipitation et de neutralisation contient au moins 95 pour cent en poids, et de préférence au moins 98 pour cent en poids de carbonate de calcium.

4. Procédé selon l'une des revendications 1 à 3, **caractérisé en ce qu'**à l'étape a), le ou les carbonate(s) de calcium appartient à la famille des produits minéraux naturels du type aragonite et de préférence calcite.

5. Procédé selon l'une des revendications 1 à 3, **caractérisé en ce que** le réactif solide anhydre de neutralisation et de précipitation consiste en de la calcite.

6. Procédé selon l'une des revendications 1 à 5, **caractérisé en ce que** le réactif solide anhydre de neutralisation et de précipitation se présente sous la forme d'une poudre ayant une granulométrie inférieure à 500 µm.

7. Procédé selon la revendication 6, **caractérisé en ce que** le réactif solide anhydre de neutralisation et de précipitation possède une granulométrie inférieure à 300 µm, avantageusement inférieure à 200 µm et de manière tout à fait préférée inférieure à 100 µm.

8. Procédé selon l'une des revendications 2 à 7, **caractérisé en ce qu'**à l'étape c), on chauffe le mélange réactionnel à une température comprise entre 30°C et 80°C, avantageusement entre 40°C et 70°C, préférentiellement entre 50°C et 65 °C, et de manière tout à fait préférée à une température de 60°C.

9. Procédé selon l'une des revendications 2 à 8, **caractérisé en ce que** les étapes a), b) et c) du procédé sont réalisées dans des réacteurs distincts.

10. Procédé selon l'une des revendications 2 à 8, **caractérisé en ce que** l'étape a) est réalisée dans un premier réacteur et les étapes b) et c) sont réalisées dans un second réacteur, distinct du premier réacteur.

11. Dispositif pour réaliser le procédé de traitement selon la revendication 1, d'un liquide aqueux acide contenant des métaux lourds, **caractérisé en ce qu'**il comprend :
a) Une enceinte de réaction (30) de type hydrocyclone comprenant des moyens d'alimentation (100) de ladite enceinte en liquide aqueux acide contenant des métaux lourds, des moyens d'alimentation (101) de ladite enceinte avec un réactif solide anhydre de précipitation et de neutralisation et des moyens de soutirage (102) d'un mélange réactionnel hétérogène liquide/solide vers un réacteur (60);
b) Un réacteur (40) disposé en aval du réacteur (30) et en amont du réacteur (60) et en communication fluidique avec ceux-ci, ledit réacteur (40) comprenant des moyens d'agitation du mélange réactionnel ;
c) Le réacteur (60) comprenant des moyens d'alimentation (103) en mélange réactionnel, des moyens d'évacuation (104) d'un effluent liquide contenant un précipité solide d'hydroxydes ou de carbonates de métaux lourds et de l'effluent liquide réactionnel résiduel, et des moyens d'agitation (106) du mélange réactionnel ; et
d) En aval du réacteur (60), un moyen pour séparer (i) le précipité d'hydroxyde ou de carbonate de métaux de (ii) l'effluent liquide résiduaire.

12. Dispositif selon la revendication 11, **caractérisé en ce que** le réacteur (60) comprend un moyen de mesure du pH (6h) du mélange réactionnel et des moyens de réglage de la valeur du pH dudit mélange réactionnel.

13. Dispositif selon la revendication 11, **caractérisé en ce que** les moyens de réglage du pH comprennent :
- un premier moyen (1a) de contrôle de la proportion volume de liquide aqueux acide poids de réactif de précipitation et de neutralisation solide anhydre dans l'enceinte de réaction (30);
- un second moyen (6j) d'alimentation du réacteur (60) en liquide aqueux acide contenant des métaux lourds.

14. Dispositif selon la revendication 13, **caractérisé en ce que** les moyens de réglage du pH comprennent en outre un troisième moyen (119) d'alimentation du réacteur (60) avec un liquide basique.

15. Dispositif selon l'une des revendications 11 à 14, **caractérisé en ce que** le réacteur (30) ou le réacteur (40) lorsqu'il est présent; ou les deux réacteurs (30) et (40), comprenne un moyen (108, 109) de mise en dépression de l'atmosphère interne des réacteurs.

## Claims

1. A method for the treatment of an aqueous acid liquid containing heavy metals, **characterized in that** it comprises a first step during which a reaction mixture is made in a reaction chamber consisting in a reactor of the hydrocyclone type, said reaction mixture comprising:
(i) the aqueous acid liquid containing the heavy metals; and
(ii) a precipitation and neutralization anhydrous solid reagent containing at least 90 weight percent of calcium carbonate.

2. A method according to claim 1, **characterized in that** it comprises the following steps:
a) making, in a reaction chamber consisting in a reactor of the hydrocyclone type, a reaction mixture comprising:
(i) the aqueous acid liquid containing the heavy metals; and
(ii) a precipitation and neutralization anhydrous solid reagent containing at least 90 weight percent of calcium carbonate;
b) agitating the reaction mixture obtained in step a);
c) adjusting the pH of the reaction mixture to a pH value at least equal to the pH value for which the heavy metals precipitate as hydroxides or carbonates; and
d) separating the heavy metal hydroxides or carbonates formed in step c) from the residual reaction liquid effluent.

3. A method according to claims 1 or 2, **characterized in that** the precipitation and neutralization anhydrous solid reagent contains at least 95 weight percent, and preferably at least 98 weight percent, of calcium carbonate.

4. A method according to one of claims 1 to 3, **characterized in that**, in step a), the calcium carbonate(s) pertains to the family of natural mineral products of the aragonite, and preferably calcite type.

5. A method according to one of claims 1 to 3, **characterized in that** the neutralization and precipitation anhydrous solid reagent consists of calcite.

6. A method according to one of claims 1 to 5, **characterized in that** the neutralization and precipitation anhydrous solid reagent is in the form of a powder with a particle size lower than 500 µm.

7. A method according to claim 6, **characterized in that** the neutralization and precipitation anhydrous solid reagent has a particle size lower than 300 µm, advantageously lower than 200 µm, and particularly preferably lower than 100 µm.

8. A method according to one of claims 2 to 7, **characterized in that**, in step c), the reaction mixture is heated to a temperature comprised between 30°C and 80°C, advantageously between 40°C and 70°C, preferably between 50°C and 65°C, and particularly preferably to a temperature of 60°C.

9. A method according to one of claims 2 to 8, **characterized in that** the steps a), b) and c) of the method are carried out in separate reactors.

10. A method according to one of claims 2 to 8, **characterized in that** the step a) is carried out in a first reactor, and the steps b) and c) are carried out in a second reactor, separate from the first reactor.

11. A device for implementing the method according to claim 1 for the treatment of an aqueous acid liquid containing heavy metals, **characterized in that** it comprises:
a) a reaction chamber (30) of the hydrocyclone type, comprising means (100) for feeding said chamber with an aqueous acid liquid containing heavy metals, means (101) for feeding said chamber with a precipitation and neutralization anhydrous solid reagent, and means (102) for drawing off an heterogeneous liquid/solid reaction mixture toward a reactor (60) ;
b) a reactor (40) arranged downstream of the reactor (30) and upstream of the reactor (60) and in fluid communication with these latter, said reactor (40) comprising means for agitating the reaction mixture;
c) the reactor (60) comprising means (103) for feeding it with the reaction mixture, means (104) for draining off a liquid effluent containing a solid heavy metal hydroxide or carbonate precipitate and the residual reaction liquid effluent, and means (106) for agitating the reaction mixture; and
d) downstream the reactor (60), means for separating (i) the metal hydroxide or carbonate precipitate from (ii) the residual liquid effluent.

12. A device according to claim 11, **characterized in that** the reactor (60) comprises means for measuring the pH value (6h) of the reaction mixture and means for adjusting the pH value of said reaction mixture.

13. A device according to claim 11, **characterized in that** the pH-value adjusting means comprise:
- a first means (1 a) for controlling the proportion volume of aqueous acid liquid / weight of neutralization and precipitation anhydrous solid reagent within the reaction chamber (30) ;
- a second means (6j) for feeding the reactor (60) with an aqueous acid liquid containing heavy metals.

14. A device according to claim 13, **characterized in that** the pH-value adjusting means further comprise a third means (119) for feeding the reactor (60) with a basic liquid.

15. A device according to one of claims 11 to 14, **characterized in that** the reactor (30) or the reactor (40), when the latter is present, or the two reactors (30) and (40), comprise a means (108, 109) for evacuating the inside atmosphere of the reactors.

## Patentansprüche

1. Verfahren zur Aufbereitung einer sauren wässrigen Flüssigkeit, die Schwermetalle enthält, **dadurch gekennzeichnet, dass** es einen ersten Schritt umfasst, bei dem man in einem Reaktionsbehälter, der aus einem Reaktor des Hydrozyklontyps besteht, ein Reaktionsgemisch bereitstellt, umfassend:
(i) die saure wässrige Flüssigkeit, die die Schwermetalle enthält; und
(ii) ein festes wasserfreies Fällungs- und Neutralisationsreagens, das wenigstens 90 Gew.-% Calciumcarbonat enthält.

2. Verfahren gemäß Anspruch 1, **dadurch gekennzeichnet, dass** es die folgenden Schritte umfasst:
a) Bereitstellen eines Reaktionsgemischs, das Folgendes umfasst, in einem Reaktionsbehälter, der aus einem Reaktor des Hydrozyklontyps besteht:
(i) die saure wässrige Flüssigkeit, die die Schwermetalle enthält; und
(ii) ein festes wasserfreies Fällungs- und Neutralisationsreagens, das wenigstens 90 Gew.-% Calciumcarbonat enthält;
b) Rühren des in Schritt a) erhaltenen Reaktionsgemischs;
c) Einstellen des pH-Werts des Reaktionsgemischs auf einen pH-Wert, der wenigstens gleich dem pH-Wert ist, bei dem die Schwermetalle in Form von Hydroxiden oder Carbonaten ausfallen; und
d) Abtrennen der in Schritt c) gebildeten Schwermetallhydroxide oder -carbonate von der restlichen abfließenden Reaktionsflüssigkeit.

3. Verfahren gemäß einem der Ansprüche 1 oder 2, **dadurch gekennzeichnet, dass** das feste wasserfreie Fällungs- und Neutralisationsreagens wenigstens 95 Gew.-% und vorzugsweise wenigstens 98 Gew.-% Calciumcarbonat enthält.

4. Verfahren gemäß einem der Ansprüche 1 bis 3, **dadurch gekennzeichnet, dass** das oder die Calciumcarbonate in Schritt a) zur Familie der natürlichen Mineralprodukte des Typs Aragonit und vorzugsweise Calcit gehören.

5. Verfahren gemäß einem der Ansprüche 1 bis 3, **dadurch gekennzeichnet, dass** das feste wasserfreie Fällungs- und Neutralisationsreagens aus Calcit besteht.

6. Verfahren gemäß einem der Ansprüche 1 bis 5, **dadurch gekennzeichnet, dass** das feste wasserfreie Fällungs- und Neutralisationsreagens in Form eines Pulvers mit einer Teilchengröße von unter 500 µm vorliegt.

7. Verfahren gemäß Anspruch 6, **dadurch gekennzeichnet, dass** das feste wasserfreie Fällungs- und Neutralisationsreagens eine Teilchengröße von unter 300 µm, vorzugsweise unter 200 µm und besonders bevorzugt unter 100 µm aufweist.

8. Verfahren gemäß einem der Ansprüche 2 bis 7, **dadurch gekennzeichnet, dass** das Reaktionsgemisch in Schritt c) auf eine Temperatur zwischen 30 und 80 °C, vorzugsweise zwischen 40 und 70 °C, besonders bevorzugt zwischen 50 und 65 °C und ganz besonders bevorzugt auf eine Temperatur von 60 °C erhitzt wird.

9. Verfahren gemäß einem der Ansprüche 2 bis 8, **dadurch gekennzeichnet, dass** die Schritte a), b) und c) des Verfahrens in verschiedenen Reaktoren durchgeführt werden.

10. Verfahren gemäß einem der Ansprüche 2 bis 8, **dadurch gekennzeichnet, dass** Schritt a) in einem ersten Reaktor durchgeführt wird und die Schritte b) und c) in einem zweiten, von dem ersten Reaktor verschiedenen Reaktor durchgeführt werden.

11. Vorrichtung zur Durchführung des Verfahrens gemäß Anspruch 1 zur Aufbereitung einer sauren wässrigen Flüssigkeit, die Schwermetalle enthält, **dadurch gekennzeichnet, dass** sie umfasst:
a) einen Reaktionsbehälter (30) des Hydrozyklontyps, der Einrichtungen (100) zur Beschickung des Behälters mit einer sauren wässrigen Flüssigkeit, die Schwermetalle enthält, Einrichtungen (101) zur Beschickung des Behälters mit einem festen wasserfreien Fällungs- und Neutralisationsreagens und Einrichtungen (102) zum Ableiten eines heterogenen flüssig/festen Reaktionsgemisches in einen Reaktor (60) umfasst;
b) einen Reaktor (40), der dem Reaktor (30) nach- und dem Reaktor (60) vorgeschaltet ist und mit diesen in Fluidverbindung steht, wobei der Reaktor (40) Einrichtungen zum Rühren des Reaktionsgemisches umfasst;
c) den Reaktor (60), der Einrichtungen (103) zur Beschickung mit einem Reaktionsgemisch, Einrichtungen (104) zum Ausleiten eines flüssigen Abstroms, der einen festen Niederschlag von Schwermetallhydroxiden oder -carbonaten und der restlichen abfließenden Reaktionsflüssigkeit enthält, sowie Einrichtungen (106) zum Rühren des Reaktionsgemisches umfasst; und
d) eine dem Reaktor (60) nachgeschaltete Einrichtung zum Abtrennen (i) des Metallhydroxid- oder -carbonatniederschlags von (ii) der restlichen abfließenden Flüssigkeit.

12. Vorrichtung gemäß Anspruch 11, **dadurch gekennzeichnet, dass** der Reaktor (60) eine Einrichtung (6h) zum Messen des pH-Werts des Reaktionsgemischs und Einrichtungen zur Regulierung des pH-Werts des Reaktionsgemischs umfasst.

13. Vorrichtung gemäß Anspruch 11, **dadurch gekennzeichnet, dass** die Einrichtungen zur Regulierung des pH-Werts umfassen:
- eine erste Einrichtung (1a) zur Überwachung des Verhältnisses von Volumen der sauren wässrigen Flüssigkeit zum Gewicht des festen wasserfreien Fällungs- und Neutralisationsreagens in dem Reaktionsbehälter (30);
- eine zweite Einrichtung (6j) zur Beschickung des Reaktors (60) mit der sauren wässrigen Flüssigkeit, die Schwermetalle enthält.

14. Vorrichtung gemäß Anspruch 13, **dadurch gekennzeichnet, dass** die Einrichtungen zur Regulierung des pH-Werts weiterhin eine dritte Einrichtung (119) zur Beschickung des Reaktors (60) mit einer basischen Flüssigkeit umfassen.

15. Vorrichtung gemäß einem der Ansprüche 11 bis 14, **dadurch gekennzeichnet, dass** der Reaktor (30) oder der Reaktor (40), falls vorhanden, oder die beiden Reaktoren (30) und (40) eine Einrichtung (108, 109) zur Erzeugung eines Unterdrucks in der inneren Atmosphäre der Reaktoren umfassen.
